# EUROPEAN PATENT SPECIFICATION

(11) **EP 0 743 330 B1**
(45) Date of publication and mention of the grant of the patent: **16.08.2001**
(21) Application number: 96201344.7
(22) Date of filing: 15.05.1996
(51) Int. Cl.: C08F 297/02

(54) **Selectively hydrogenated symmetrical linear block copolymers**
Selektiv hydrierte symmetrische lineare Blockcopolymere
Copolymères blocs linéaires symétriques sélectivement hydrogénés

(30) Priority: 16.05.1995 EP 95303270
(43) Date of publication of application: 20.11.1996
(73) Proprietor: SHELL INTERNATIONALE RESEARCH MAATSCHAPPIJ B.V., 2596 HR Den Haag (NL)
(72) Inventor: Dubois, Philippe, 4000 Liege (BE); Jerome, Robert, 4000 Liege (BE); Van der Steen, Frederik Hendrik, 1031 CM Amsterdam (NL); Walhof, Judith Johanna Berendina, 1031 CM Amsterdam (NL); Yu, Yi-Song, 4000 Liege (BE)
(74) Representative: Kortekaas, Marcellinus C. J. A.

(56) References cited:
- EP-A- 0 682 041
- US-A- 4 659 784
- US-A- 5 166 274
- JOURNAL OF POL. SCI. PART A: POL. CHEM. ED., vol. 27, no. 12, 1989, pages 4001-4012, XP000116603 T. E. LONG ET AL.: "Synthesis and characterization of poly(t-butyl methacrylate-b-isoprene-b-t-butyl methacrylate) block copolymers by anionic techniques"

## Description

The present invention relates to selectively hydrogenated symmetrical linear block copolymers, comprising blocks derived from conjugated diene, mono vinylaromatic and/or polar vinyl monomer, and a process for their manufacture.

More in particular the invention relates to hydrogenated symmetrical linear block copolymers comprising blocks derived from polar vinyl monomers, such as lower alkyl acrylate or methacrylate esters, 2- or 4- vinylpyridine, esters or anhydrides of maleic acid, fumaric acid, itaconic acid, cis -4- cyclohexene -1,2- dicarboxylic acid, endo-cis-bicyclo (2,2,1)-5-heptene-2, 3-dicarboxylic acid or mixtures thereof, and internal blocks derived from conjugated diene and optionally from a mono vinyl aromatic, and to a process for the manufacture thereof by using an improved dilithio initiator.

Up to now several proposals were made for the preparation of dilithium organo compounds for the anionic polymerization of monovinylaromatic and/or conjugated diene monomers into block copolymers, as was known from e.g. US patents Nos. 3,652,516; 3,734,973; 3,663,634; 3,694,516,; 3,668,263; 3,903,168; 3,954,894; 4,039,593; 4,172,100; 4,182,818; 4,960,842; European patent applications Nos. 0316857; 0413294; 0599671, and from Macromolecules 5, 453-8 (1969); R.P. Foss et al, Macromolecules 12, 344-6 (1979); C.W. Kamienski at al, Curr. Appl. Sci. Med. Technol. 315-25 (1985); R.P. Foss et al, Moacromolecules 10, 287-291 (1977) and Macromolecules 12, 1210-1216 (1979); Polymer 23, 1953-9 (1982); T.E. long et al, J. Polym. Sci. Part A, Polym. Chem. vol. 27, 4001-4012 (1989).

Although the use of dilithio initiatior had been disclosed for the preparation of symmetrical linear block coplymers, which had to show a desired narrow molecular weight distribution, up to now no actual commercial polymerisation process has been developed with the use of said diinitiators, due to several practical reasons.

It was generally recognised that in most proposed processes a polar compound such as amines or ethers had to be used, which caused the occurence of a too high vinyl content in the poly (conjugated diene) blocks, with the effect that such block copolymers could not be used for those end use applications, for which a good low temperature performance is required.

The desired narrow molecular weight distribution of the linear symmetrical block copolymers, which is required for more modern sophisticated end use applications, could not be reached in a reliable constant quality degree.

On the other hand it will be appreciated by an average person skilled in the art that symmetrical linear block copolymers, containing terminal blocks derived from polar vinyl monomers and internal blocks derived from conjugated diene and optionally monovinyl aromatic, cannot be produced by coupling of two living initially prepared intermediate diblock or triblock copolymers, because the active lithium atom will always be connected to the poly (polar vinyl monomer) block, which for practical reasons can only be created in the last step after introduction of an end capping agent to the growing chain composed of poly (conjugated diene) and/or poly (monovinyl aromatic) blocks.

Moreover it will be appreciated by an average person skilled in the art that symmetrical linear block copolymers, containing terminal blocks derived from polar vinyl monomers and internal blocks derived conjugated diene and optionally monovinyl aromatic hydrocarbons, cannot be produced by subsequent polymerization of the respective monomers, using a monofunctional lithium initiator.

It will be appreciated that with reference to the still existing need for linear symmetrical block copolymers, which could meet the modern requirements of sophisticated end use applications and would have to show therefore significantly improved physical properties, one of the objects of the present invention was to provide said linear symmetrical block copolymers and another one was to provide a manufacturing process for said block copolymers.

As a result of extensive research and experimentation these symmerical block copolymers aimed at having a narrow molecular weight distribution (Mw/Mn ≤1.20 and preferably ≤1.10) have been surprisingly found now.

Accordingly, the invention is relating to symmetrical linear block copolymers of the formulae C-A-B-A-C or C-B-C, wherein the B blocks represent poly (predominantly conjugated diene) blocks, which have been selectively hydrogenated, and wherein the vinyl content in the precursor copolymer is in the range of from 20 to 45 mol % relative to the originally present conjugated diene, wherein the A blocks represent poly (predominantly monovinyl aromatic) blocks, and wherein the C blocks represent poly (predominantly polar vinyl compound) blocks, representing a bound weight fraction, relative to the weight of the total block copolymer of ≤ 30 wt %, and preferably ≤15 wt % and more preferably in the range of from 3 to 9 wt %, the molecular weight distribution of the total linear block copolymers being ≤1.20 and preferably ≤1.10.

Preferably the B blocks in the symmetrical linear block copolymers of the formulae CA-B-AC or CBC, have been selectively hydrogenated until a residual unsaturation degree (RU) of ≤ 20% and more preferably ≤ 5%.

The hereinbefore specified linear symmetrical block copolymers, if selectively hydrogenated, have been found to show a surprisingly improved tensile strength, permanent set at break, modulus at 300% elongation, and a surprisingly improved temperature behaviour, as compared to those corresponding properties of the linear symmetrical linear block copolymers comprising poly (predominantly conjugated diene) blocks, non-terminal poly (predominantly polar vinyl monomer) blocks and optionally poly (predominantly mono vinyl aromatic) blocks.

With the terms "poly (predominantly conjugated diene), poly (predominantly polar vinyl monomer)) and poly (predominantly monovinyl aromatic) blocks, as used throughout the present specification, is meant that the indicated monomer may be substantially pure or may be mixed in a minor degree with a structurally related monomer (e.g. isoprene with butadiene or vice versa) or with a structurally different monomer and preferably the same comonomer(s) which occur(s) in other block segments, i.e. in amounts of less than 15 mol % of the total monomers of said blocks and preferably less than 5 mol %.

Suitable examples of monomer mixtures constituting block B are mixtures of isoprene or butadiene and optional minor amounts of monomers selected from styrene, alpha-methylstyrene, p-vinyltoluene, m-vinyltoluene, 0-vinyltoluene, 4-ethylstyrene, 3-ethylstyrene, 2-ethylstyrene, 4-tert.butylstyrene, 2,4-dimethylstyrene, butadiene or isoprene, 2-ethyl-1,3-butadiene, 2,3-dimethyl-1,3-butadiene and 1,3-pentadiene or mixtures therof.

Suitable examples of monomer mixtures constituting the optional blocks A are mixtures of styrene and optional minor amounts of monomers selected from the group consisting of alpha-methylstyrene, p-vinyltoluene, m-vinyltoluene, o-vinyltoluene, 4-ethylstyrene, 3-ethylstyrene, 2-ethylstyrene, 4-tert.butylstyrene, 2,4-dimethylstyrene, 2 or 4-vinylpyridine, butadiene, isoprene, 2-ethyl-1,3-butadiene, 2,3-dimethyl-1,3-butadiene and 1,3-pentadiene or mixtures therof.

Preferably the constituting monomers of blocks A are mixtures of styrene in a major amount and structurally related monomers as specified herinbefore in a minor amount and preferably alpha-methylstyrene, while the constituting monomers of block B are selected from butadiene, isoprene and mixtures thereof.

Suitable examples of monomer mixtures constituting blocks C are mixtures of major component selected from lower alkyl (C₁-C₄) esters of acrylic acid or methacrylic acid such as tert.butylmethacrylate, methylacrylate, methylmethacrylate, or esters or anhydrides of maleic acid, fumaric acid, itaconic acid, cis-4-cyclohexane-1,2-dicarboxylic acid, endocisbicyclo(2,2,1)-5-heptene-2,3-dicarboxylic acid or mixtures thereof, 2- or 4-vinylpyridine.

More in particular the invention is relating to those linear symmetrical selectively hydrogenated block copolymers, wherein the respective blocks have been derived from substantially pure single monomer.

More preferred are block copolymers having selectively hydrogenated poly (butadiene) or poly (isoprene) blocks, poly (styrene) blocks and/or poly (acrylate) or poly (methacrylate) blocks, containing hydrolyzable ester groups.

Most preferred are block copolymers having selectively hydrogenated poly (butadiene) blocks, poly (styrene)blocks and/or poly (tert. butyl acrylate) blocks or poly (tert.butyl methacrylate) blocks. Said block copolymers show a tensile strength (more than 30 MPa) which may be 30% higher than those of the conventional thermoplastic elastomers A-B-A. The temperature behaviour of the novel block copolymers is also improved as compared to the usual A-B-A based polymers. A service temperature of C-A-B-A-C block copolymers having a content of polar vinyl monomer selected from methylacrylate methylmethacrylate, t-butylacrylate and t-butylmethacrylate of around 8 wt % increases up to 20-30° higher than conventional A-B-A triblock copolymers.

Permanent set at break of A-B-A has been found improved in C-A-B-A-C block copolymers having short PMMA blocks (decreasing from 25% to 20% or lower). The modulus at 300% extension was found to increase up to 10 MPa.

Suitable poly (predominantly polar vinyl monomer) blocks in these symmetrical linear block copolymers have apparent molecular weights in the range from 3000 to 5000 and preferably from 3500 to 5500, relative to a total block copolymer molecular weight in the range of from 80,000 to 180,000.

Another feature of the present invention is formed by the herinbefore specified symmetrical linear block copolymers C-A-B-A-C or C-B-C wherein the B blocks have been selectively hydrogenated and wherein the C blocks derived from acrylates or methacrylates having a hydrolyzable group and preferably tert butyl acrylate or tert. butyl methacrylate, have been completely or partially hydrolyzed.

In particular said hydrolyzed C-A-B-A-C block copolymers, wherein the blocks C have been hydrolyzed up to a degree of 10% or more of the original amount of present esters groups, were found to possess improved mechanical properties. For example, the tensile strength is significantly enhanced at relative low acid contents and decreases upon further increasing the acid content.

It will be appreciated that the hereinbefore specified significantly improved physical properties could certainly not be expected by an average person skilled in the art on account of prior art publications disclosing block copolymers, disclosing at least one poly (polar vinyl monomer) block which either had been prepared by using a monofunctional lithium indicator such as those discussed in European patent applications no. 0564,910 A2, 0480,336 A2, 0486,335 A2 and British patent no. 1,332,165, or by using a difunctional lithium initiator, which could not provide the required narrow molecular weight distribution, such as those disclosed in European patent application no 0298 667 A2, 0599 671 A2 and US patent no. 4,104,331.

Another aspect of the present invention is formed by a process for the manufacture of the hereinbefore specified linear symmetrical block copolymers. Said process comprises:
(a) the reaction of two equivalents mono organo lithium initiator with 1,3-diisopropenyl benzene at a temperature in the range of from -20° to 60°C in an apolar hydrocarbon main solvent, and optionally in the presence of a tertiary amine;
(b) charging an ether activator in an amount of at most 10 vol% and preferably ≤8 vol%, relative to the total solvent volume, optionally mixed with an alkoxylithium or lithium ether alkoxide, having from 1 to 15 carbon atoms, and a predominantly conjugated diene monomer as hereinbefore defined, to the dilithio initiator solution of step (a), and allowing essentially complete polymerization to occur;
(c) charging a predominantly monovinyl aromatic monomer or a predominantly polar vinyl monomer after introduction of an end-capping reagent and addition of ether activator, and allowing essentially complete polymerization to occur;
(d) optional introduction of an end-capping reagent and an ether activator and charging a predominantly polar vinyl monomer, and allowing essentially complete polymerization;
(e) selective hydrogenation of the poly (conjugated diene) midblock of the obtained block copolymer, after termination of the living block copolymer,
(f) and optional hydrolysis of the terminal poly (polar vinyl monomer) blocks.

It will be appreciated by a person skilled in the art, that said process steps (a), (b), (c) and (d) will preferably be carried out under an inert gas atmosphere and preferably under nitrogen gas.

Examples of ethers which can be used in the reaction steps (b), (c) and (d) are diethyl ether, dibutyl ether, tetrahydrofuran, ethylene glycol dimethyl ether, ethylene glycol dibutyl ether, ethylene glycol diethyl ether, diethylene glycol dibutyl ether, 1,2-diethoxypropane, dioxane, triethylene glycol ether, 1,2-dimethoxy benzene; 1,2,3-trimethoxy benzene; 1,2,4-trimethoxy benzene; 1,2,3-triethoxy benzene; 1,2,3-tributoxy benzene; 1,2,4-triethoxy benzene or mixtures thereof. Preferred ethers are dioxane, 1,2-diethoxypropane, diethylether and tetrahydrofuran.

As mono-organolithium initiator to be used in step (a) a great variety of aryl, aralkyl, cycloalkyl or alkyl lithium compounds can be used. More preferably lower alkyl lithium initiators are used and most preferably tert-butyl lithium or sec-butyl lithium.

The apolar hydrocarbon main solvent was found to be preferably selected from cycloalkanes having from 5 to 8 carbon atoms and more preferably having 5 or 6 carbon atoms. Also mixtures of such cycloalkanes or mixtures of predominant amounts of such cycloalkanes and minor amounts of aliphatic hydrocarbons, having from 5 to 8 carbon atoms can be used, but the use of substantially pure cyclopentane were found to be most preferred.

The alkoxy lithium compound optionally to be used in step (a), preferably has from 3 to 6 carbon atoms and most preferably 4 carbon atoms. Most preferably tert-butoxy lithium is used.

The alkoxy lithium or lithium ether alkoxide compound is added in a concentration range from 0 to 5 mole equivalent per equivalent lithium already present.

Suitable lithium ether alkoxides optionally to be used in step (b), are those according to the general formula R¹(OR²)ₘ Li, wherein R¹ represents a linear or branched lower alkyl group, having from 1 to 6 carbon atoms, arylalkyl or alkylaryl, R² represents a linear or branched alkylene group having from 2 to 4 carbon atoms, and wherein m is an integer 1, 2 or 3. Preferably said lithium ether alkoxides are selected from methoxy ethoxy lithium ethanolate or methoxy lithium ethanolate.

The amount of ether activator to be applied in the reactor medium in steps (b), (c) and (d) is at most 10 vol% and preferably ≤8 vol%.

The optionally used tertiary amine is applied, if any in a molar ratio range, relative to butyllithium, of from 0.1 to 10 and preferably form 0.5 to 2.

It will be appreciated that according to a preferred process embodiment the main solvent in steps (a), (b), (c), (d), (e) and (f) is one and the same, although this is not strictly necessary.

The hydrogenation step (e) can be carried out by known methods per se, which are usually applied for the selective hydrogenation of conventional A-B-A polymers, such as those disclosed in European patents nos. 0186910, 0316982, 0358382, 0368419, 0401897 and 0467429 and European patent applications nos. 0301,665, 0471,415, 0460,725, 0532,099 and 0549,063.

According to a preferred embodiment the living polymer obtained in step (d) is terminated by means of hydrogen or an isotope of it, and hydrogenated immediately thereafter by means of titanium di(cyclopentadienyl) catalyst.

The optional hydrolysis of poly (methacrylate ester) or poly (acrylate ester) blocks may be performed by methods known in the art and preferably at a temperature from 130 to 150°, under an inert gas, and preferably nitrogen, and in the presence of a catalytic amount of a strong sulphonic acid, such as methanesulphonic acid or p-toluenesulphonic acid at a concentration of from 1 to 3 wt% relative to the weight of the polymer. Such a hydrolysis up to a residual ester content of ≤10 mole %, was found not to effect the central block structure.

The invention is illustrated by following examples, however without any restriction of the scope of it to these specific embodiments.

### Example 1

### Reaction of BuLi with 1,3-diisopropenyl benzene

To a strirred vessel, containing 200ml of dry cyclohexane 0.68g (6 mmoles) of triethylamine were added. Subsequently, 6 mmoles of tert. butyl lithium (t-BuLi) (5 ml of a 1.2 molar solution in hexane) and 0.48g (3 mmoles) of 1,3-diisopropenylbenzene were added at 0°C. The reaction was continued for 1 hour and provided 1,3-bis (1-lithio, 1-methyl-3,3-dimethyl butyl) benzene.

### Example 2

### Synthesis of high vinyl SBS block coploymers with 1,3-bis (1-lithio, 1-methyl-3,3-dimethyl butyl) benzene.

To a reactor, charged with 11 of dry cyclohexane were added a few drops of 1,3-bis(1-lithio,1-methyl-3,3-dimethyl butyl) benzene to titrate the solution. Thereafter the reactor was charged with 7.5 vol% diethylether, followed by 36g of butadiene and 40ml of the solution of Example 1, containing 0.6 mmol of diinitiator at room temperature. The temperature was allowed to rise to 40°C and polymerization continued for 10 hours at 40°C.

A sample was taken for analysis, revealing that the polybutadiene showed the following characteristics: peak Mw 65000 g/mol, Mw/Mn =1.06 and a vinyl content of 44%

To the reactor were then added 19g of styrene and polymerization was continued for 2 hours at 40°C. To the solution 1ml of methanol was added to terminate the polymerization. The recovered triblock copolymer was stabilised and had the following chracteristics: peak Mw 100000 g/mol, Mw/Mn =1.07. A sample was subjected to ozonolysis to leave PS with a peak Mw 18000 g/mol.

A solvent casted sample had a tensile strength of 31.5 MPa, an elongation at break of 1000%, a modulus at 300% elongation of 4.9 MPa and a permanent set of 25%.

### Examples 3-5

### Synthesis of high vinyl SBS block coplymers with 1,3-bis(1-lithio, 1-methyl-3,3-dimethyl butyl)benzene.

Other similar SBS triblock copolymers were prepared following the procedure of Example 2, excepted that diethyl-ether was replaced by THF, tert-butyl methyl ether, and DEP. The block copolymer characteristics have been listed in Table I:

| Sample | Cosolvent | Mw PB | Mw PS | Mw/Mn | Vinyl % |
|---|---|---|---|---|---|
| 3 | 100ppm DEP | 65000 | 17000 | 1.08 | 41 |
| 4 | 7.5 vol% MTBE | 65000 | 17000 | 1.09 | 43.5 |
| 5 | 1.0 vol% THF | 65000 | 16500 | 1.08 | 84.5 |

### Examples 6-8

### Synthesis of PMMA-SBS-PMMA block copolymers

A solution of living Li-SBS-Li triblock copolymer was prepared using the procedure of Example 2. After completion of the styrene polymerization, 12 ml of 0.5 molar of diphenylethylene solution in cyclohexane were added. The end capping reaction was continued for 30 min at room temperature. Then the red solution is cooled to 0°C and 11 of dry tetrahydrofuran is added and the solution cooled to -78°C. At this temperature 4.8g of methyl methacrylate were introduced giving a clear colourless solution. The polymerization was continued for 30 min and then 1ml of methanol was introduced to terminate the polymerization. The recovered polymers were stabilized with antioxidant and showed the characteristics as shown in Table II:

**TABLE II**

| Sample | PB | PS | PMMA | Mw/Mn | Vinyl | Tensile strength | Elong. at break | Modulus at 300% | Permanent set |
|---|---|---|---|---|---|---|---|---|---|
| 6 | 66000 | 13000 | 4000 | 1.07 | 45% | 40.3 | 800 | 7.8 | 17 |
| 7 | 67000 | 8500 | 8000 | 1.07 | 44% | 40.8 | 800 | 7.8 | 17 |
| 8 | 65000 | 4000 | 12000 | 1.07 | 44% | 41.4 | 700 | 10.3 | 17 |

### Examples 9-12

### Synthesis of PTBMA-SBS-PTBMA block copolymers

In the same way as described for Examples 6-8 with the exception that MMA was replaced by TBMA (tert-butyl methacrylate) these block copolymers were prepared. The characteristics of these block copolymers have been listed in Table III:

| Sample | PB | PS | PTBMA | Mw/Mn | Vinyl | Tensile strength | Elong. at break | Modulus | Permanent set |
|---|---|---|---|---|---|---|---|---|---|
| 9 | 67500 | 15000 | 2000 | 1.05 | 44 | 34.5 | 850 | 6.4 | 30 |
| 10 | 62000 | 12500 | 5000 | 1.06 | 44 | 41.5 | 800 | 6.9 | 30 |
| 11 | 70000 | 9500 | 9000 | 1.09 | 45 | 38.5 | 800 | 7.8 | 30 |
| 12 | 67500 | 4000 | 13000 | 1.08 | 44 | 37.5 | 800 | 8.2 | 25 |

### Examples 13-16

### Synthesis of hydrogenated PMMA-SBS-PMMA block copolymers and hydrogenated PTBMA-SBS-PTBMA block copolymers.

A solution of living Li-PMMA-SBS-PMMA Li block copolymer as obtained according to the Examples 6-8, and a solution of living Li-PTBMA-SBS-PTBMA-Li block copolymer as obtained in Example 9 were treated with methanol and hydrogen gas respectively and the terminated block copolymer solution was subsequently substantially hydrogenated (RU ≤5%) using several generally known hydrogenation catalysts selected from aluminium/cobalt; aluminium/nickel and titanium dicyclopentadienyl. The characteristics of the resulting block copolymers have been listed in Table IV and compared with those of a structurally related commercial block copolymer grade:

| Sample | Polymer | Catalyst | RU | Tensile strength | Elong. at break | Modulus at 300% | Permanent set |
|---|---|---|---|---|---|---|---|
| Comparative | SEBS^{a} | Ni/Al | <1.5% | 24.2 | 700 | 6.2 | |
| 13 | no 6 | Co/Al | <2.0% | 47.5 | 500 | 15.5 | 26 |
| 14 | no 7 | Co/Al | <2.0% | 46.5 | 500 | 16.0 | 45 |
| 15 | no 8 | Ni/Al | <1.5% | 44.5 | 500 | 17.5 | 60 |
| 16 | no 9 | TI | <4.0% | 47.5 | 500 | 15.5 | 26 |

| | | | | | | | |
|---|---|---|---|---|---|---|---|
| ^{a} KRATON G-1654 (Trademark), block copolymer grade comprising a poly(styrene)-poly(ethylene-butylene)-polystyrene block copolymer, the ethylenic residual unsaturation of the poly(ethylene-butylene) block being less than 1%. | | | | | | | |

## Claims

1. Symmetrical linear block copolymers of the formulae C-A-B-A-C or C-B-C, wherein the A blocks represent poly (predominantly monovinyl aromatic) blocks; the B blocks represent poly (predominantly conjugated diene) blocks which have been selectively hydrogenated; and the C blocks represent poly (predominantly polar vinyl compound) blocks, said C blocks representing a bound weight fraction, relative to the weight of the total block copolymer of ≤30 wt %; characterised in that the vinyl content in the precursor copolymer of the B blocks is in the range of from 20 to 45 mol % relative to the originally present conjugated diene, and the molecular weight distribution of the total linear block copolymers is ≤1.20.

2. Symmetrical linear block copolymers according to claim 1, characterized in that the C blocks represent a bound weight fraction in the range of from 3 to 9 wt%.

3. Symmetrical linear block copolymers according to claims 1-2, characterized in that the molecular weight distribution of the total block copolymer is ≤1.10.

4. Symmetrical linear block copolymers as claimed in any one of claims 1-3 wherein the B blocks have been selectively hydrogenated until a degree of residual ethylenical unsaturation (RU) of ≤20%.

5. Symmetrical linear block copolymers according to claim 4, characterized in that the residual unsaturation is at most 5%.

6. Symmetrical linear block coploymers according to claims 1-5, characterized in that the C blocks have been derived from a hydrolyzable acrylate or methacrylate and have been completely or partially hydrolyzed.

7. Process for the manufacture of the symmetrical linear block coploymers according to claims 1-6, comprising
(a) the reaction of two equivalents mono organo lithium initiator with 1,3-diisopropenyl benzene at a temperature in the range of from -20° to 60°C in an apolar hydrocarbon main solvent, and optionally in the presence of a tertiary amine.
(b) charging an ether activator in an amount of at most 10 vol% and preferably ≤8 vol%, relative to the total solvent volume, optionally mixed with an alkoxylithium or lithium ether alkoxide, having from 1 to 15 carbon atoms, and a predominantly conjugated diene monomer as hereinbefore defined, to the dilithio initiator solution of step (a), and allowing essentially complete polymerization to occur;
(c) charging a predominantly monovinyl aromatic monomer or a predominantly polar vinyl monomer after introduction of an end-capping reagent and addition of ether activator, and allowing essentially complete polymerization to occur;
(d) optional introduction of an end-capping reagent and an ether activator and charging a predominantly polar vinyl monomer, and allowing essentially complete polymerization;
(e) selective hydrogenation of the poly (conjugated diene) midblock of the obtained block copolymer, after termination of the living block copolymer,
(f) and optional hydrolysis of the terminal poly(polar vinyl monomer)blocks.

8. Process according to claim 7, characterized in that ethers are used selected from:
dioxane, 1,2-diethoxypropane, diethylether and tetrahydrofuran.

## Patentansprüche

1. Symmetrische lineare Blockcopolymere mit den Formeln C-A-B-A-C oder C-B-C, worin die Blöcke A für Poly(überwiegend Monovinylaromat)blöcke stehen; die Blöcke B Poly(überwiegend konjugiertes Dien)blöcke darstellen, die selektiv hydriert worden sind; und die Blöcke C für Poly(überwiegend polare Vinylverbindung)blöcke stehen, wobei diese Blöcke C einen Anteil an gebundenem Gewicht, bezogen auf das Gewicht des Gesamtblockcopolymers, von ≤30 Gew.-% darstellen; dadurch gekennzeichnet, daß der Vinylgehalt im Vorläufercopolymer der Blöcke B im Bereich von 20 bis 45 Mol-%, bezogen auf das ursprünglich vorliegende konjugierte Dien, liegt und daß die Molekulargewichtsverteilung der gesamten linearen Blockcopolymere ≤1,20 ist.

2. Symmetrische lineare Blockcopolymere nach Anspruch 1, dadurch gekennzeichnet, daß die Blöcke C einen Anteil an gebundenem Gewicht im Bereich von 3 bis 9 Gew.-% ausmachen.

3. Symmetrische lineare Blockcopolymere nach den Ansprüchen 1 bis 2, dadurch gekennzeichnet, daß die Molekulargewichtsverteilung des gesamten Blockcopolymers ≤1,10 ist.

4. Symmetrische lineare Blockcopolymere nach einem der Ansprüche 1 bis 3, worin die Blöcke B selektiv bis auf ein Ausmaß an restlicher ethylenischer Unsättigung (RU) von ≤20% hydriert worden sind.

5. Symmetrische lineare Blockcopolymere nach Anspruch 4, dadurch gekennzeichnet, daß die restliche Unsättigung höchstens 5% ausmacht.

6. Symmetrische lineare Blockcopolymere nach den Ansprüchen 1 bis 5, dadurch gekennzeichnet, daß die Blöcke C von einem hydrolysierbaren Acrylat oder Methacrylat abgeleitet worden sind und daß sie vollständig oder partiell hydrolysiert worden sind.

7. Verfahren zur Herstellung der symmetrischen linearen Blockcopolymere nach den Ansprüchen 1 bis 6, umfassend:
(a) die Umsetzung von zwei Äquivalenten an Monoorganolithiuminitiator mit 1,3-Diisopropenylbenzol bei einer Temperatur im Bereich von -20°C bis 60°C in einem apolaren Kohlenwasserstoffhauptlösungsmittel, und gegebenenfalls in Gegenwart eines tertiären Amins;
(b) das Zusetzen eines Etheraktivators in einer Menge von höchstens 10 Vol.-% und vorzugsweise ≤8 Vol.-%, bezogen auf das gesamte Lösungsmittelvolumen, gegebenenfalls im Gemisch mit einem Alkoxylithium oder Lithiumetheralkoxid, mit 1 bis 15 Kohlenstoffatomen, und eines überwiegend konjugierten Dienmonomers gemäß vorstehender Definition zu der Dilithioinitiatorlösung von Stufe (a), und Ablaufenlassen einer im wesentlichen vollständigen Polymerisation;
(c) das Zuführen eines überwiegend monovinylaromatischen Monomers oder eines überwiegend polaren Vinylmonomers nach Einführen eines Endverkappungsreagenz und Zusetzen von Etheraktivator, und Ablaufenlassen einer im wesentlichen vollständigen Polymerisation;
(d) gegebenenfalls das Zusetzen eines Endverkappungsreagenz und eines Etheraktivators und Einbringen eines überwiegend polaren Vinylmonomers und Ablaufenlassen einer im wesentlichen vollständigen Polymerisation;
(e) das selektive Hydrieren des Poly(konjugiertes Dien)mittelblocks des erhaltenen Blockcopolymers nach Terminierung des lebendes Blockcopolymers, und
(f) gegebenenfalls die Hydrolyse der endständigen Poly(polares Vinylmonomer)blöcke.

8. Verfahren nach Anspruch 7, dadurch gekennzeichnet, daß die verwendeten Ether unter Dioxan, 1,2-Diethoxypropan, Diethylether und Tetrahydrofuran ausgewählt werden.

## Revendications

1. Copolymères blocs linéaires symétriques des formules C-A-B-A-C ou C-B-C, dans lesquelles les blocs A représentent des blocs de poly (en prédominance monovinyl aromatique), les blocs B représentent des blocs de poly (en prédominance diène conjugué) qui ont été sélectivement hydrogénés, et les blocs C représentent des blocs de poly (en prédominance composé vinylique polaire), lesdits blocs C représentant une fraction pondérale liée, par rapport au poids du copolymère bloc total de ≤30% en poids, caractérisés en ce que la teneur en vinyle dans le copolymère précurseur des blocs B se situe dans la gamme de 20 à 45 moles % par rapport au diène conjugué initialement présent, et la distribution de poids moléculaires des copolymères blocs linéaires totaux est de ≤1,20.

2. Copolymères blocs linéaires symétriques suivant la revendication 1, caractérisés en ce que les blocs C représentent une fraction pondérale liée allant de 3 à 9% en poids.

3. Copolymères blocs linéaires symétriques suivant l'une ou l'autre des revendications 1 et 2, caractérisés en ce que la distribution de poids moléculaires du copolymère bloc total est de ≤1,10.

4. Copolymères blocs linéaires symétriques suivant l'une quelconque des revendications 1 à 3, dans lesquels les blocs B ont été sélectivement hydrogénés jusqu'à un degré d'insaturation éthylénique résiduelle (IR) de ≤20%.

5. Copolymères blocs linéaires symétriques suivant la revendication 4, caractérisés en ce que l'insaturation résiduelle est de tout au plus 5%.

6. Copolymères blocs linéaires symétriques suivant l'une quelconque des revendications 1 à 5, caractérisés en ce que les blocs C provenaient d'un acrylate ou méthacrylate hydrolysable et ont été complètement ou partiellement hydrolysés.

7. Procédé de fabrication des copolymères blocs linéaires symétriques suivant l'une quelconque des revendications 1 à 6, comprenant :
(a) la réaction de deux équivalents d'initiateur mono-organolithique avec du 1,3-diisopropényl benzène à une température allant de -20° à 60°C dans un solvant principal hydrocarboné apolaire, et éventuellement en présence d'une amine tertiaire;
(b) le chargement d'un activateur d'éther en une quantité de tout au plus 10% en volume et avantageusement de ≤8% en volume, par rapport au volume de solvant total, éventuellement mélangé à un alcoxylithium ou un alcoolate d'éther de lithium, comportant de 1 à 15 atomes de carbone, et d'un monomère en prédominance de diène conjugué tel que défini précédemment, à la solution d'initiateur dilithio de l'étape (a), et le traitement pour qu'une polymérisation essentiellement complète se produise;
(c) le chargement d'un monomère en prédominance monovinyl aromatique ou d'un monomère en prédominance vinylique polaire après l'introduction d'un réactif de coiffage et l'addition d'activateur d'éther, et le traitement pour qu'une polymérisation essentiellement complète se produise;
(d) l'introduction éventuelle d'un réactif de coiffage et d'un activateur d'éther et le chargement d'un monomère en prédominance vinylique polaire, et le traitement pour qu'une polymérisation essentiellement complète se produise;
(e) l'hydrogénation sélective du bloc médian de poly (diène conjugué) du copolymère bloc obtenu, après la terminaison du copolymère bloc vivant,
(f) et l'hydrolyse éventuelle des blocs de poly (monomère vinylique polaire) terminaux.

8. Procédé suivant la revendication 7, caractérisé en ce que l'on utilise des éthers choisis parmi le dioxane, le 1,2-diéthoxypropane, l'éther diéthylique et le tétrahydrofuranne.
